# EUROPEAN PATENT SPECIFICATION

(11) **EP 3 270 752 B1**
(45) Date of publication and mention of the grant of the patent: **08.05.2019**
(21) Application number: 15715839.5
(22) Date of filing: 16.03.2015
(51) Int. Cl.: A47J 43/06, A23G 1/10, B02C 17/16

(54) **A BALL REFINER DEVICE AND FOOD PREPARATION EQUIPMENT COMPRISING THIS DEVICE**
KUGELRAFFINIERVORRICHTUNG UND NAHRUNGSMITTELZUBEREITUNGSAUSRÜSTUNG MIT DIESER VORRICHTUNG
DISPOSITIF DE RAFFINAGE À BILLES ET ÉQUIPEMENT DE PRÉPARATION ALIMENTAIRE COMPRENANT LEDIT DISPOSITIF

(43) Date of publication of application: 24.01.2018
(73) Proprietor: Malavasi, Giuseppe, 40010 San Marino di Bentivoglio (BO) (IT)
(72) Inventor: Malavasi, Giuseppe, 40010 San Marino di Bentivoglio (BO) (IT)
(74) Representative: Provvisionato, Paolo
(86) International application number: PCT/IB2015/051901
(87) International publication number: WO 2016/147025

(56) References cited:
- EP-A1- 2 110 023
- DE-U1-202011 000 152
- FR-A5- 2 087 101
- GB-A- 1 069 986
- GB-A- 1 568 270

## Description

The present invention relates to the field of food preparation equipment. In particular, the invention relates to ball refiner devices.

There is a known type of food preparation equipment comprising a processing chamber for containing the ingredients to be used in the preparation. This known equipment also comprises a heating system for cooking the food, and processing tools mounted inside the processing chamber for chopping or mixing the ingredients. Examples of the known equipment mentioned above are described in the patent EP 1603437 and in the utility models DE 202011000152, DE 202011000153 and DE 202011000154 filed by the present applicant.

There are also known refining machines using steel balls, used in the food industry, especially in the confectionery sector, to achieve a very small particle size in the products used in food preparations. These machines are generally designed to perform this task only, and are therefore useful only where considerable quantities of products are to be refined, or where there are no limitations on the space for installing these machines. GB 1568270 describes an example of such a machine.

Consequently there is a requirement in the industry for a ball refiner device which can be available for use, including occasional use, without the need for major investment, and which can make use of the production infrastructure that is normally already in place in food industry environments.

The object of the present invention is to meet the requirement expressed above, and to provide a ball refiner device that is economical and easy to use, having a high level of automation, good refining performance and high flexibility in use, and allowing efficient cleaning of its components, while also being extremely safe in use.

In order to achieve the aforesaid objects and other objects, the present invention proposes a ball refiner device that can be used as an accessory of food preparation equipment of the aforementioned type, having the features indicated in the claims below.

The device of the present invention may easily be configured as an accessory of a wide range of food preparation equipment, from complex machines such as those described in EP 1603437 to machine which may be much simpler, such as mixing machines and the like, essentially provided with a processing chamber or container having a shaft projecting from the base for the use of rotating tools such as blades, mixers and the like.

A major advantage of the present invention is that all the standard functions of the food preparation equipment can be used in the refining process. In particular, it is possible to make use of the flexibility of the equipment to determine the operating temperature, which may be hot or cold, for the introduction of any necessary solid, fluid or gaseous components into the processing container at any point in the process. A particular advantage is that the refining operations can be performed at reduced pressure or in a vacuum, to improve the conservation and processing of the product in perishable food preparations.

Another, equally substantial advantage is that the washing and disinfection functions incorporated in known machines of this type can be used for thoroughly cleaning the ball refiner device, by the circulation of water and/or steam for example. It should be noted that the rapid and efficient washing of machines and appliances used in the food industry is an important characteristic, and is commonly a decisive factor, or at least an important consideration, in users' choice of a machine or appliance.

Further characteristics and advantages of the invention will be made clear by the following detailed description of a preferred embodiment of the invention, which refers to the attached drawings, provided purely by way of non-limiting example, in which:
- Figure 1 is a top view of food preparation equipment provided with a ball refiner device according to the present invention;
- Figure 2 is a section taken along the line II-II of Figure 1;
- Figure 3 is a top view of a recirculating ball refiner device according to the present invention;
- Figure 4 is a side view taken in the direction of the arrow IV of Figure 3;
- Figure 5 is a section taken along the line V-V of Figure 4; and
- Figure 6 is an exploded view of the basket of the ball refiner device according to the present invention.

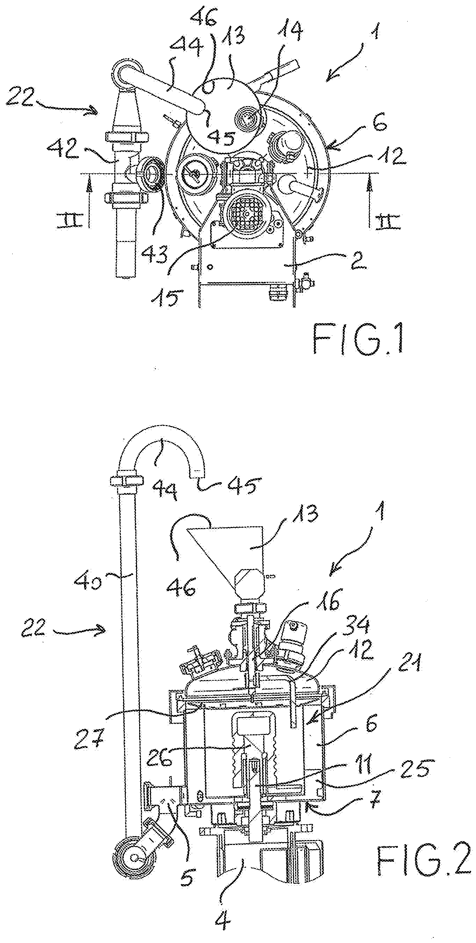

With reference to the attached figures, the reference numeral 1 indicates the whole of an item of food preparation equipment whose characteristics are known from the patent EP 1603437 and from the utility models DE 202011000152, DE 202011000153 and DE 202011000154 filed by the present applicant. The equipment in question can perform multiple functions, comprising for example the mixing, chopping, heating and cooling of ingredients used for preparing food, as well as the cleaning of its parts which come into contact with food during preparation. The equipment 1 comprises a support structure 2, shown only partially in Figure 1 for clarity of description, which supports a container 6 forming a processing chamber of substantially cylindrical shape, which may be tilted if necessary to facilitate the exit of the product contained therein through a discharge outlet 5, which is normally closed by a shutter or valve operated manually, semiautomatically or automatically. A connecting shaft 11, on which tools of various kinds can be mounted, projects from the base 7 of the container 6. The connecting shaft 11 is connected to a motor 4, placed under the container 6, which can be used to rotate the connecting shaft 11. Tools for processing the food, by mixing or chopping the food for example, can be mounted on the connecting shaft 11 in a known way.
The container 6 is closed at its top by a cover 12 having sealing members to enable a reduced pressure environment to be created in the container 6 for what is known as vacuum cooking, when this is required for food preparation. A hopper 13, with an inlet valve 14, is also positioned on the cover 12, for supplying food products to the container 6. An auxiliary motor 15 is placed in the upper part of the equipment 1 so as to transmit a rotary movement selectively to an auxiliary shaft 16 passing through the centre of the cover 12, with provision for attaching additional processing tools, such as spatulas, mixers, agitators or the like, to this auxiliary shaft.

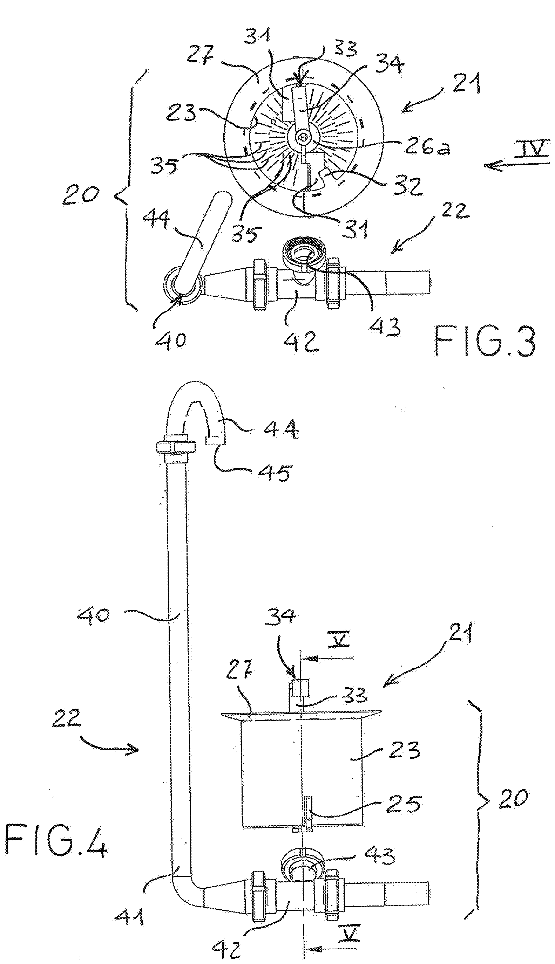

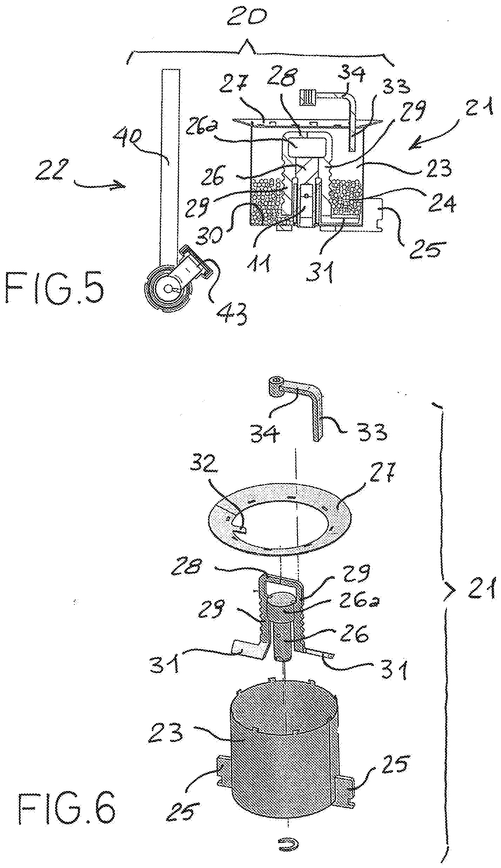

A ball refiner device 20 comprising a refiner unit 21 and an optional recirculation unit 22, shown in greater detail in Figures 3 to 6, can be coupled to the food preparation equipment 1. In particular, the refiner unit 21 comprises a basket 23 containing a plurality of balls 24 (see Figure 5) made of steel or other hard material. The basket 23 is cylindrical in shape with a diameter smaller than the inside diameter of the container 6 of the equipment 1, so that it can be housed conveniently therein. One or more fins 25 extend from the outer wall of the basket 23, near its base 24, as far as the inner wall of the container 6, the function of these fins being explained below. The top of the basket 23 is widened by an annular appendage 27 extending as far as the upper edge of the container 6. On the inner side of this annular appendage 27 there is formed a lug 32 which can be engaged by the shank 33 of a drive member 34, which can be coupled to the auxiliary shaft 16 of the equipment 1 for the optional rotation of the basket 23.

An axial tube 26 is placed inside the basket 23, this tube being rotatable with respect to the basket and engageable in a known way with the connecting shaft 11, from which it can receive the rotary motion, using the attachment and detachment means provided for other known tools of the equipment 1. The axial tube 26 has an end head 26a to which is fixed an agitation member 28 having two vertical corrugated arms 29, placed at the sides of the axial tube, from which arms two appendages 31, preferably inclined, extend radially at the base 30 of the basket 23. These appendages 31 may also be made in the form of vanes, made from tube or circular bars, or may be made in other forms.

In the base 30 of the basket 23 there are formed a plurality of through slits 35, having a narrow width, preferably but not exclusively less than 1 mm, or even more preferably between 0.1 and 0.8 mm, through which the product contained in the basket 23 can flow into the container 6. In a preferred embodiment, the through slits 25 are positioned in a radiating formation in the base 30 of the basket 23, preferably in two or more arrays.

As mentioned above, the ball refiner device 20 may optionally comprise a recirculation unit 22, made in the form of a substantially vertical recirculation conduit 40 communicating at its lower end 41 with a substantially horizontal tubular inlet portion 42, having an inlet aperture 43 with an attachment suitable for connection to the discharge outlet 5 of the equipment 1. The recirculation conduit 40 communicates at its top 42 with a tubular discharge portion 44, the outlet 45 of which is aligned and directed, in use, towards the mouth 46 of the hopper 13. The product may be conveyed into the recirculation conduit 40 until it emerges from the outlet 45, by means of a screw, a pump, a compressed air system, or other equivalent means.

If necessary, the ball refiner device 20 may be mounted in the equipment 1 after any tools coupled to the connecting shaft 11 and/or to the auxiliary shaft 16 have been removed from the equipment. With the cover 12 open, the basket 23 is inserted into the container 6. The centring of the basket 23 in the container 6, and therefore the centring of the axial tube 26 on the connecting shaft 11, are facilitated by the presence of the fins 25. The drive member 34 is mounted on the auxiliary shaft 16, while the inlet aperture 43 of the recirculation unit 22 is connected to the discharge outlet 5, so that the outlet 45 is aligned and directed towards the mouth 46 of the hopper 13, as shown in Figures 1 and 2.

The product to be refined is introduced into the basket 23, which is then closed by the cover 12, which completely closes and hermetically seals the container 6. The refining operations are then performed, according to selected or predetermined processing cycles, by putting the connecting shaft 11 into rotation, thereby causing the rotation of the axial tube 26 and then the agitation member 28, which agitates the balls 24 in a turbulent manner, resulting in the grinding and refining of the product contained in the basket 23. The movement of the balls 24, which move chaotically in the basket 23 and collide with one another in a random way, causes the crushing and comminution of the product in the basket 23 until the product is reduced to very small dimensions, including dimensions of the order of microns, which are difficult to measure.

The product refined in the basket 23 is drained to the base of the container 6, passing through the slits 35. Having thus been drained out, the product can then be transferred out of the container 6, particularly through the discharge outlet 5, by the action of the fins 25 which are made to rotate relative to the base of the container 6 by a rotation of the whole basket 23, caused by the shank 33 of the drive member 34 coupled to the auxiliary shaft 16, which moves the lug 32 of the basket 23.

The movement of the agitation member 28, by means of the connecting shaft 11, and the movement of the basket 23, by means of the auxiliary shaft 16, are independent of one another and may be activated separately, with rotary movements in either the same or opposite directions. Clearly, owing to the characteristics of the equipment 1, the rotary movements may, independently of one another, be either continuous or discontinuous, being intermittent for example, and the rotation speed may be constant or variable over time, according to the processing cycle for the food product concerned.

If the recirculation unit 22 is present, the product transferred out of the container 6 may be reintroduced into the refining cycle via the hopper 13 positioned on the cover 12 of the equipment 1, in order to refine the product repeatedly to obtain increasingly higher degrees of refining, according to the requirements of the food preparation process.

By using this ball refiner device, which can be used as a simple accessory of known equipment, it is possible to carry out food preparation in ways which would be otherwise be impossible without the use of a costly and bulky ball refiner machine. This is because this system is capable of increasing the degree of refining of certain substances which have previously been refined to the maximum level achievable by means of the bladed tools normally provided with known equipment. By way of example, it is possible to produce cocoa-based water-free spreads and the like, or, again by way of example, extra-fine brightly coloured sauces such as mustard sauce. The same system can also be used to produce products other than typical food products, such as highly refined paints.

Clearly, provided that the principle of the invention is retained, the forms of embodiment and the details of construction can be varied widely from what has been described and illustrated, without departure from the scope of the present invention.

## Claims

1. A ball refiner device comprising a refiner unit (21) having a basket (23) in which a plurality of balls (23) is placed, and an agitation member (28) mounted in the basket (23) and rotatable relative thereto, capable of agitating the plurality of balls (24) to refine a product placed in the basket (23), the agitation member (28) comprising selectively detachable means of attachment for coupling, in use, to a drive member (11) of equipment (1) for which the ball refiner device forms an accessory tool.

2. A ball refiner device according to Claim 1, wherein the base (30) of the basket (23) comprises a plurality of through slits (35) through which the refined product present in the basket (23) can flow in use.

3. A ball refiner device according to Claim 2, wherein the slits (35) have a width of less than 1 mm.

4. A ball refiner device according to any of Claims 1 to 3, wherein the agitation member (28) has two vertical corrugated arms (29), placed at the sides of an axial tube (26), from which arms one or more appendages (31) extend radially at the base (30) of the basket (23).

5. A ball refiner device according to any of the preceding claims, wherein a lug (32) is formed at the top of the basket (23), this lug being engageable by the shank (33) of a drive member (34), which can be coupled, in use, to a different drive member (16) of the equipment (1) in order to rotate the basket 23.

6. A ball refiner device according to any of the preceding claims, further comprising a recirculation unit (22) with a conduit (40, 42) having an inlet aperture (43), for receiving a product emerging from the refiner unit (21) and reintroducing the product into the refiner unit.

7. A ball refiner device according to Claim 6, wherein the inlet aperture (43) has means (5) for engaging with a discharge outlet (5) of the equipment (1).

8. Equipment for food preparation (1) comprising a ball refiner device (20) according to any of Claims 1 to 7, the basket (23) being housed in a container (6) of the equipment (1), the agitation member (28) being capable of being selectively coupled to a drive member (11) of the equipment (1) for which the ball refiner device forms an accessory tool.

9. Equipment according to Claim 8, the drive member (11) comprising a connecting shaft (11) projecting from the base of the container (6) and engaged with the agitation member (28) for agitating the plurality of balls (24), the container (6) being closable by means of a cover (12) from which there projects an auxiliary shaft (16) engaged with a rotary drive member (34) for driving the basket (23), the connecting shaft (11) and the auxiliary shaft (16) being drivable in rotation independently of one another in order to rotate, respectively, the agitation member (28) for agitating the plurality of balls (24) and the basket (23).

10. Equipment according to Claim 9, wherein the basket (23) has one or more fins (25) projecting radially as far as the inner wall of the container (6) to transfer to a discharge outlet (5) the product which emerges from slits (35) formed in the base (30) of the basket (23) and which is collected in the container (6), a recirculation unit (22) mounted on the discharge outlet (5) drawing in the product and reintroducing it into the basket (23).

## Patentansprüche

1. Kugelraffiniervorrichtung mit einer Raffiniereinheit (21) mit einem Korb (23), in dem sich eine Vielzahl von Kugeln (24) befindet, und einem in dem Korb (23) montierten und dazu drehbaren Rührelement (28), das in der Lage ist, die Vielzahl von Kugeln (24) zu bewegen, um ein in dem Korb (23) befindliches Produkt zu raffinieren, wobei das Rührelement (28) wahlweise abnehmbare Befestigungsmittel umfasst, die im Gebrauch mit einem Antriebselement (11) eines Geräts (1) zu koppeln sind, für das die Kugelraffiniervorrichtung ein Zusatzwerkzeug bildet.

2. Kugelraffiniervorrichtung nach Anspruch 1, wobei der Boden (30) des Korbs (23) eine Vielzahl von Durchgangsschlitzen (35) umfasst, durch die das in dem Korb (23) befindliche raffinierte Produkt im Gebrauch fließen kann.

3. Kugelraffiniervorrichtung nach Anspruch 2, wobei die Schlitze (35) eine Breite von weniger als 1 mm haben.

4. Kugelraffiniervorrichtung nach einem der Ansprüche 1 bis 3, wobei das Rührelement (28) zwei vertikale gerippte Arme (29) aufweist, die sich an den Seiten eines axialen Rohres (26) befinden, wobei sich von diesen Armen ein oder mehrere Fortsätze (31) radial am Boden (30) des Korbes (23) erstrecken.

5. Kugelraffiniervorrichtung nach einem der vorhergehenden Ansprüche, wobei eine Nase (32) am oberen Ende des Korbes (23) ausgebildet ist, wobei diese Nase in den Schaft (33) eines Antriebselements (34) eingreifen kann, das im Gebrauch mit einem anderen Antriebselement (16) des Geräts (1) gekoppelt werden kann, um den Korb (23) in Drehung zu versetzen.

6. Kugelraffiniervorrichtung nach einem der vorhergehenden Ansprüche, ferner umfassend eine Rückführungseinheit (22) mit einer Rohrleitung (40, 42) mit einer Einlassöffnung (43) zur Aufnahme eines aus der Raffiniereinheit (21) austretenden Produkts und zum erneuten Einleiten des Produkts in die Raffiniereinheit.

7. Kugelraffiniervorrichtung nach Anspruch 6, wobei die Einlassöffnung (43) Mittel (5) zum Eingreifen in eine Auslassöffnung (5) des Geräts (1) aufweist.

8. Gerät zur Nahrungsmittelzubereitung (1) mit einer Kugelraffiniervorrichtung (20) nach einem der Ansprüche 1 bis 7, wobei der Korb (23) in einem Behälter (6) des Geräts (1) untergebracht ist, wobei das Rührelement (28) wahlweise mit einem Antriebselement (11) des Geräts (1) gekoppelt werden kann, für das die Kugelraffiniervorrichtung ein Zusatzwerkzeug bildet.

9. Gerät nach Anspruch 8, wobei das Antriebselement (11) eine Verbindungswelle (11) umfasst, die aus dem Boden des Behälters (6) ragt und mit dem Rührelement (28) in Eingriff steht, um die Vielzahl von Kugeln (24) zu bewegen, wobei der Behälter (6) mit Hilfe eines Deckels (12) verschlossen werden kann, aus dem eine Hilfswelle (16) ragt, die mit einem drehbaren Antriebselement (34) zum Antrieb des Korbes (23) in Eingriff steht, wobei die Verbindungswelle (11) und die Hilfswelle (16) unabhängig voneinander in Drehung versetzt werden können, um jeweils das Rührelement (28) zum Bewegen der Vielzahl von Kugeln (24) und den Korb (23) in Drehung zu versetzen.

10. Gerät nach Anspruch 9, wobei der Korb (23) eine oder mehrere Rippen (25) aufweist, die radial bis zur Innenwand des Behälters (6) ragen, um das Produkt, das aus im Boden (30) des Korbes (23) gebildeten Schlitzen (35) austritt und das in dem Behälter (6) gesammelt wird, zu einer Auslassöffnung (5) zu befördern, wobei eine an der Auslassöffnung (5) montierte Rückführungseinheit (22) das Produkt ansaugt und es wieder in den Korb (23) einleitet.

## Revendications

1. Dispositif de raffinage à billes comprenant une unité de raffinage (21) ayant un panier (23) dans lequel une pluralité de billes (23) est placée, et un élément d'agitation (28) monté dans le panier (23) et pouvant tourner par rapport à ce dernier, capable d'agiter la pluralité de billes (24) pour raffiner un produit placé dans le panier (23), l'élément d'agitation (28) comprenant des moyens de fixation sélectivement détachables pour le couplage, à l'usage, à un élément d'entraînement (11) d'équipement (1) pour lequel le dispositif de raffinage à billes forme un outil accessoire.

2. Dispositif de raffinage à billes selon la revendication 1, dans lequel la base (30) du panier (23) comprend une pluralité de fentes débouchantes (35) à travers lesquelles le produit raffiné présent dans le panier (23) peut s'écouler, à l'usage.

3. Dispositif de raffinage à billes selon la revendication 2, dans lequel les fentes (35) ont une largeur inférieure à 1 mm.

4. Dispositif de raffinage à billes selon l'une quelconque des revendications 1 à 3, dans lequel l'élément d'agitation (28) a deux bras ondulés verticaux (29), placés sur les côtés d'un tube axial (26), à partir desquels bras, un ou plusieurs appendices (31) s'étendent radialement au niveau de la base (30) du panier (23).

5. Dispositif de raffinage à billes selon l'une quelconque des revendications précédentes, dans lequel une patte (32) est formée au sommet du panier (23), cette patte pouvant être mise en prise par la tige (33) d'un élément d'entraînement (34), qui peut être couplé, à l'usage, à un élément d'entraînement différent (16) de l'équipement (1) afin de faire tourner le panier (23).

6. Dispositif de raffinage à billes selon l'une quelconque des revendications précédentes, comprenant en outre une unité de recirculation (22) avec un conduit (40, 42) ayant une ouverture d'entrée (43), pour recevoir un produit sortant de l'unité de raffinage (21) et réintroduire le produit dans l'unité de raffinage.

7. Dispositif de raffinage à billes selon la revendication 6, dans lequel l'ouverture d'entrée (43) a des moyens (5) pour se mettre en prise avec une sortie de décharge (5) de l'équipement (1).

8. Équipement pour préparation alimentaire (1) comprenant un dispositif de raffinage à billes (20) selon l'une quelconque des revendications 1 à 7, le panier (23) étant logé dans un récipient (6) de l'équipement (1), l'élément d'agitation (28) pouvant être sélectivement couplé à un élément d'entraînement (11) de l'équipement (1) pour lequel le dispositif de raffinage à billes forme un outil accessoire.

9. Équipement selon la revendication 8, l'élément d'entraînement (11) comprenant un arbre de raccordement (11) faisant saillie de la base du récipient (6) et mis en prise avec l'élément d'agitation (28) pour agiter la pluralité de billes (24), le récipient (6) pouvant être fermé au moyen d'un couvercle (12) à partir duquel fait saillie un arbre auxiliaire (16) mis en prise avec un élément d'entraînement rotatif (34) pour entraîner le panier (23), l'arbre de raccordement (11) et l'arbre auxiliaire (16) pouvant être entraînés en rotation indépendamment l'un de l'autre afin de faire tourner, respectivement, l'élément d'agitation (28) pour agiter la pluralité de billes (24) et le panier (23).

10. Équipement selon la revendication 9, dans lequel le panier (23) a une ou plusieurs ailettes (25) faisant radialement saillie jusqu'à la paroi interne du récipient (6) pour transférer, à une sortie de décharge (5), le produit qui sort des fentes (35) formées dans la base (30) du panier (23) et qui est collecté dans le récipient (6), une unité de recirculation (22) montée sur la sortie de décharge (5) aspirant le produit et le réintroduisant dans le panier (23).
